# EUROPÄISCHE PATENTANMELDUNG

(11) **EP 1 939 584 A2**
(43) Veröffentlichungstag der Anmeldung: **02.07.2008**
(21) Anmeldenummer: 07024702.8
(22) Anmeldetag: 20.12.2007
(51) Int. Cl.: G01B 11/06

(54) **Verfahren zur Bestimmung der Dicke einer Metallisierungsschicht auf einer Polymerfolie**

(30) Priorität: 29.12.2006 AT 21532006
(71) Anmelder: Hueck Folien Ges.m.b.H., 4342 Baumgartenberg (AT)
(72) Erfinder: Schmidegg, Klaus, Dr., 4040 Linz (AT); Bergsmann, Martin, Dr., 4020 Linz (AT)
(74) Vertreter: Landgraf, Elvira

(57) **Zusammenfassung**

Es wird ein Verfahren zur Bestimmung der Dicke einer Metallisierungsschicht (1) auf einer Polymerfolie (2) beschrieben. Zur genauen Erfassung der Dicke sehr dünner Metallisierungsschichten (1) wird vorgeschlagen, dass die optisch anisotrope Polymerfolie (2) auf der beschichteten Seite mit linear polarisiertem Licht (6) bestrahlt wird und dass die durch die Metallisierungsschicht (1) bedingte Dämpfung des relativen Unterschiedes der Lichtreflexion an der die Metallisierungsschicht (1) aufnehmenden Oberfläche der Polymerfolie (2) entlang zweier orthogonaler Polarisationsachsen als Maß für die Dicke der Metallisierungsschicht (1) ermittelt wird.

## Beschreibung

Voraussetzung für ein gleichmäßiges Aufbringen einer Metallisierungsschicht auf eine Polymerfolie ist unter anderem die Kenntnis der aufgebrachten Schichtdicke, um die die Schichtdicke beeinflussenden Parameter des Beschichtungsverfahrens entsprechend wählen bzw. einstellen zu können. Herkömmliche Verfahren zur Bestimmung der Dicke einer Metallisierungsschicht beruhen auf einer Messung der optischen Dichte der Metallisierungsschicht oder auf einer Erfassung des elektrischen Schichtwiderstandes mit Hilfe von Wirbelströmen. Nachteilig bei diesen bekannten Verfahren ist, dass sich für Schichtdicken unter 15 nm ungenügende Messempfindlichkeiten ergeben, insbesondere wenn für funktionelle Schichten geringe Toleranzen der Schichtdicke gefordert werden, wie dies beispielsweise bei optischen Schichten der Fall ist.

Der Erfindung liegt somit die Aufgabe zugrunde, ein Verfahren zur Bestimmung der Dicke einer Metallisierungsschicht auf einer Polymerfolie so auszugestalten, dass Schichtdicken unter 30 nm mit einer hohen Messempfindlichkeit ermittelt werden können, und zwar im Bedarfsfall auch bei bewegten Schichtträgern.

Die Erfindung löst die gestellte Aufgabe dadurch, dass die optisch anisotrope Polymerfolie auf der beschichteten Seite mit linear polarisiertem Licht bestrahlt wird und dass die durch die Metallisierungsschicht bedingte Dämpfung des relativen Unterschiedes der Lichtreflexion an der die Metallisierungsschicht aufnehmenden Oberfläche der Polymerfolie entlang zweier orthogonaler Polarisationsachsen als Maß für die Dicke der Metallisierungsschicht ermittelt wird.

Die Erfindung geht von der Erkenntnis aus, dass für linear polarisiertes Licht, das an einer optisch anisotropen Oberfläche reflektiert wird, die von der Wellenlänge des einfallenden Lichtstrahls abhängige, auf die gesamte reflektierte Intensität bezogene, relative Differenz der Reflexionskoeffizienten entlang der beiden Hauptachsen der Anisotropie kennzeichnend für das die reflektierende Oberfläche bildende, optisch anisotrope Polymer ist und durch die Metallisierungsschicht gedämpft wird, wobei die Dämpfung mit zunehmender Schichtstärke exponentiell ansteigt, und zwar mit einer vom Beschichtungsmaterial abhängigen Dämpfungskonstante der Exponentialfunktion. Aufgrund der Kenntnis einerseits der für die jeweilige Polymerfolie charakteristischen relativen Differenz der Reflexionskoeffizienten und andererseits der vom Beschichtungsmaterial abhängigen Dämpfung dieser Größe kann somit anhand einer Messung der gedämpften relativen Differenz der Reflexionskoeffizienten auf die Dicke der Metallisierungsschicht rückgeschlossen werden.

Die Messung der durch die Metallisierungsschicht gedämpften relativen Differenz der Reflexionskoeffizienten kann in vergleichsweise einfacher Art mit Hilfe einer üblichen Reflexionsanisotropie-Spektroskopie direkt und mit hoher Genauigkeit durchgeführt werden. Zufolge der Normierung durch den Bezug der Größe der Differenz der Reflexionskomponenten auf die gesamte reflektierte Intensität haben Intensitätsschwankungen des einfallenden Lichtes oder Schwankungen im Bereich der Gesamtreflexion keinen Einfluss auf das Messergebnis, was sich vorteilhaft auf die Messgenauigkeit auswirkt. Die mit der Reflexionsanisotropie-Spektroskopie ermittelten Messdaten brauchen lediglich einer Auswertestufe zugeführt zu werden, um mittels einer vorgebbaren Kalibrierfunktion die Dicke der Metallisierungsschicht anhand der aus den Messdaten ableitbaren Dämpfung bestimmen zu können. Aufgrund des gegenüber der Schichtdicke exponentiellen Verlaufs der Dämpfung nimmt die Messempfindlichkeit mit abnehmbarer Schichtdicke zu. Für Schichtdicken unter 5 nm kann mit einer Auflösung kleiner 0,3 nm gerechnet werden, was über den mit bekannten Messverfahren erreichbaren Auflösungen liegt.

Wegen der hohen zeitlichen Auflösung des vorgeschlagenen Messverfahrens kann die Dicke der Metallisierungsschicht auch bei bewegter Polymerfolie ermittelt werden, so dass die Schichtdicke unmittelbar nach dem kontinuierlichen Abscheiden der Metallisierungsschicht auf der Polymerfolie gegebenenfalls noch innerhalb einer für die Beschichtung vorgesehenen Vakuumkammer erfasst werden kann, um bei Abweichungen des Istwertes der Schichtdicke von einem vorgegebenen Sollwert in das Beschichtungsverfahren im Sinne eines Soll-Istwertabgleiches eingreifen zu können.

Im allgemeinen kann davon ausgegangen werden, dass während ihrer Herstellung die Polymerfolien einer Streckung unterworfen werden, die eine ausreichende optische Anisotropie für eine Messung mittels Reflexionsanisotropie-Spektroskopie mit sich bringen. Ist dies nicht der Fall, so kann die Polymerfolie während der Bestrahlung mit linear polarisiertem Licht einer Streckung unterworfen werden, die entsprechende Anisotropien nach sich zieht.

Anhand der Zeichnung wird das erfindungsgemäße Verfahren näher beschrieben.

Es zeigen
- Fig 1: eine Anordnung zur Durchführung eines erfindungsgemäßen Messverfahrens in einem schematischen Blockschaltbild und
- Fig. 2: den Verlauf der relativen Differenz der Reflexionskoeffizienten für eine unbeschichtete und eine beschichtete Polymerfolie in Abhängigkeit von der Photonenenergie.

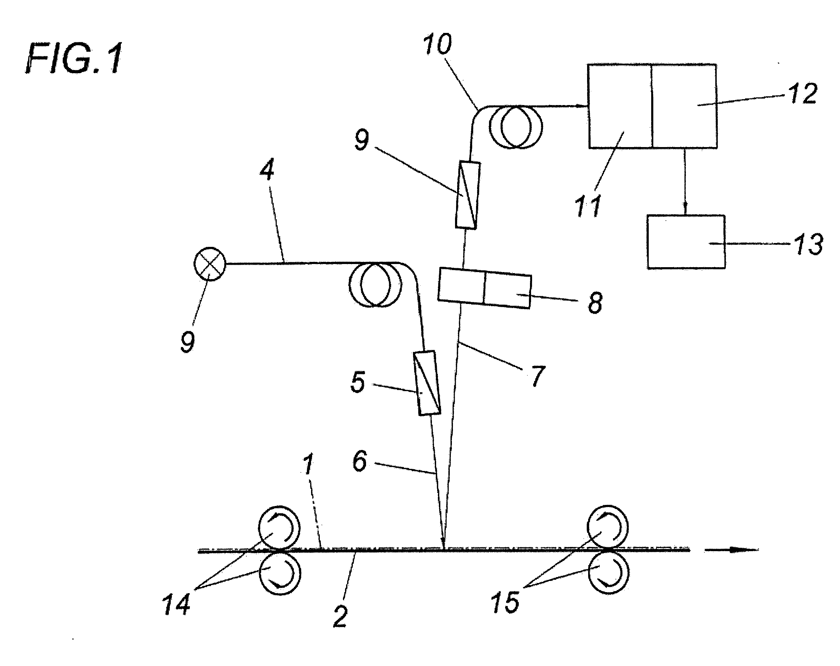

Gemäß dem Ausführungsbeispiel nach der Fig. 1 wird die Dicke einer strichpunktiert angedeuteten Metallisierungsschicht 1 auf einer Polymerfolie 2 mit Hilfe der Reflexionsanisotropie-Spektroskopie ermittelt. Der zu diesem Zweck vorgesehene Messaufbau umfasst in herkömmlicher Art eine Lichtquelle 3, beispielsweise eine Xenon-Hochdrucklampe mit einem nutzbaren Spektrum zwischen 1,5 und 6 eV, deren Licht über einen Lichtwellenleiter 4 einem Polarisator 5 zur linearen Polarisation des Lichtes zugeführt wird. Der linear polarisierte Lichtstrahl 6, der annähernd senkrecht auf die beschichtete Seite der Polymerfolie 2 auftrifft, durchdringt die dünne Metallisierungsschicht 1 und wird an der Oberfläche der Polymerfolie reflektiert. Aufgrund der optischen Anisotropie der Polymerfolie 2 wird der Polymerisationszustand des einfallenden Lichtstrahls 6 geändert, und zwar wird das Licht durch unterschiedliche Absorption in Richtung der beiden Hauptachsen der Anisotropie unterschiedlich polarisiert, so dass sich für den reflektierten Lichtstrahl 7 unterschiedliche Reflexionskoeffizienten entlang der Polarisierungsrichtungen ergeben. Der reflektierte Lichtstrahl 7 wird in üblicher Weise einem photoelastischen Modulator 8 zugeführt, in dem eine Phasenverschiebung zwischen den beiden Polarisatonsrichtungen erzeugt und mit einer vorgegebenen Frequenz moduliert wird. Der danach angeordnete Analysator 9 wandelt die Phasenmodulation in eine Amplitudenmodulation um. Das Ausgangssignal des Analysators 9 wird über einen Lichtwellenleiter 10 an einen Monochromator 11 und einen an den Monochromator 11 angeflanschten Photomultiplier 12 angelegt, um das Spektrum dieses Signals aufzunehmen. Über einen Lock-In-Verstärker wird das Signalspektrum zur Auswertung einer Auswertestufe 13 zugeleitet, in der das durch die Metallisierungsschicht 1 gedämpfte Spektrum der relativen Differenz der beiden Reflexionskoeffizienten erfasst und aus einer vorgegebenen Kalibrierfunktion anhand der Dämpfung die Dicke der Metallisierungsschicht 1 ermittelt werden kann.

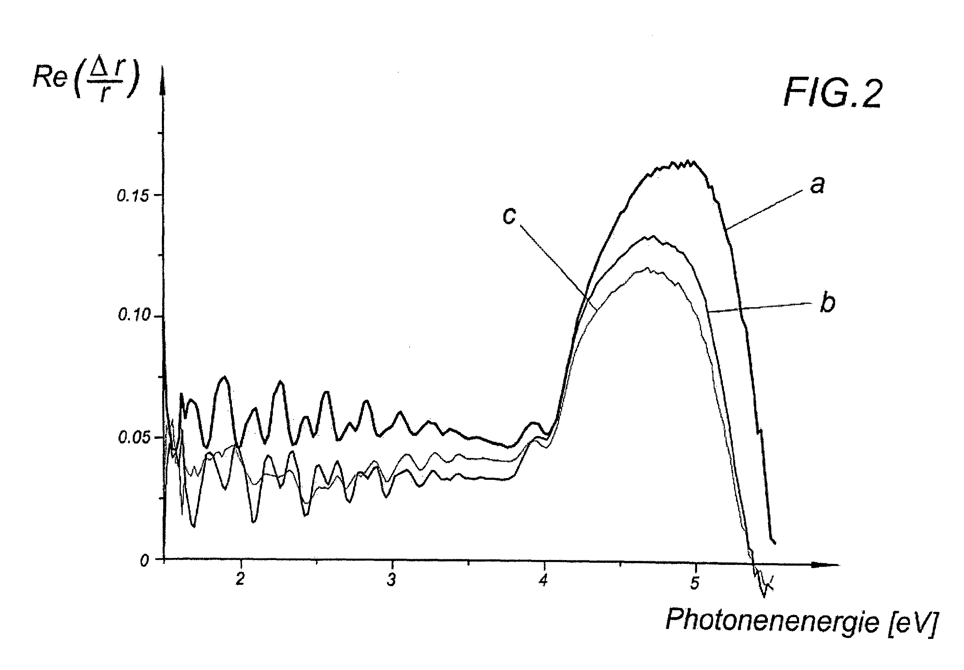

In der Fig. 2 ist das Spektrum des Realanteils Re der relativen Differenz Δr/r der aus einem Realteil und einem Imaginärteil bestehenden Reflexionskoeffizienten in Abhängigkeit von der Photonenenergie und damit von den Wellenlängen dargestellt. Die Kurve a zeigt den Verlauf des Realteils Re der relativen Differenz Δr/r für eine unbeschichtete Polymerfolie 2 aus Polythethylenterephthalat (PET) mit einer Dicke von 50 µm. Die Messergebnisse der gedämpften relativen Differenz der Reflexionskoeffizienten für eine beschichtete, 50 µm dicke Polymerfolie 1 sind in den Kurven b und c dargestellt. Die Kurve b zeigt das Messergebnis der Reflexionsanisotropie-Spektroskopie für eine PET-Folie 1 mit einer Beschichtung aus Silber, wobei diese Metallisierungsschicht 1 eine Dicke von 1,0 nm aufwies. Die Kurve c wurde für eine Dicke der Metallisierungsschicht 1 aus Silber von 1,5 nm aufgenommen, wobei die Dicke der PET-Folie wieder 50 µm betrug. Aus dem Vergleich der Kurven a, b und c ergibt sich, dass im Bereich der Photonenenergie von beispielsweise 4,5 - 5 eV, die durch die Metallisierungsschicht 1 bedingte Dämpfung der relativen Differenz Δr/r eine Messung der Dicke der Metallisierungsschicht mit einer hohen Auflösung erlaubt, insbesondere bei dünnen Metallisierungsschichten 1. Bei dickeren Metallisierungsschichten 1 im Bereich über 30 nm fällt die Dämpfung bereits so stark aus, dass eine Änderung des Messsignals bei einer weiteren Steigerung der Dicke der Metallisierungsschicht 1 nicht mehr messbar ist.

Die Kurven a, b und c können sowohl bei ruhender Polymerfolie 2 als auch während einer Bewegung der Polymerfolie 2 aufgenommen werden, was in der Fig. 1 durch Treibwalzen 14, 15 angedeutet wird. Dies bedeutet, dass die Dicke der Metallisierungsschicht 1 auch unmittelbar nach ihrem Abscheiden auf der Polymerfolie 2 innerhalb einer Vakuumkammer gemessen werden kann. Es ist lediglich für ein entsprechendes Fenster für den Durchtritt eines annähernd senkrecht auf die Polymerfolie 2 auftreffenden Lichtstrahls 6 zu sorgen. Über eine unterschiedliche Umlaufgeschwindigkeit der Treibwalzen 14, 15 können außerdem auf die Polymerfolie 2 Zugspannungen aufgebracht werden, um optische Anisotropie im Bedarfsfall zu erhöhen.

## Patentansprüche

1. Verfahren zur Bestimmung der Dicke einer Metallisierungsschicht auf einer Polymerfolie, **dadurch gekennzeichnet, dass** die optisch anisotrope Polymerfolie auf der beschichteten Seite mit linear polarisiertem Licht bestrahlt wird und dass die durch die Metallisierungsschicht bedingte Dämpfung des relativen Unterschiedes der Lichtreflexion an der die Metallisierungsschicht aufnehmenden Oberfläche der Polymerfolie entlang zweier orthogonaler Polarisationsachsen als Maß für die Dicke der Metallisierungsschicht ermittelt wird.

2. Verfahren nach Anspruch 1, **dadurch gekennzeichnet, dass** die Dicke der Metallisierungsschicht bei bewegter Polymerfolie ermittelt wird.

3. Verfahren nach Anspruch 1 oder 2, **dadurch gekennzeichnet, dass** die Polymerfolie während der Bestrahlung mit linear polarisiertem Licht einer Streckung unterworfen wird.
